# EUROPEAN PATENT APPLICATION

(11) **EP 4 670 669 A2**
(43) Date of publication of application: **31.12.2025**
(21) Application number: 25185879.1
(22) Date of filing: 27.06.2025
(51) Int. Cl.: A61C 5/64, A61C 5/66, A61C 5/68

(54) **DENTAL CAPSULE CONTAINER**

(30) Priority: 27.06.2024 JP 2024103991; 18.06.2025 JP 2025102049
(71) Applicant: Shofu Inc., Kyoto 605-0983 (JP)
(72) Inventor: KUMAGAI, Tomohiro, Kyoto-shi, 605-0983 (JP); UCHIDA, Jun, Kyoto-shi, 605-0983 (JP); TSUKAMOTO, Masahiro, Kyoto-shi, 605-0983 (JP); YAMAGURO, Yuu, Toyama, 939-0643 (JP); ABE, Hideki, Toyama, 939-0643 (JP); YAMAGUCHI, Atsushi, Toyama, 939-0643 (JP); YONEDA, Arisa, Toyama, 939-0643 (JP); SASAKI, Kazuki, Toyama, 939-0643 (JP)
(74) Representative: Mewburn Ellis LLP

(57) **Abstract**

The dental capsule container that can mix the first component and the second component in the appropriate proportions in the mixing portion can be provided even if the pressing force is not constantly applied to the piston member. An annular fitting portion D4 extending in a radial direction and a circumferential direction is formed at an end close to the operating portion D2 of the piston portion D1 of the piston member D. An annular fitted portion C9 fitted by the annular fitting portion D4 is formed in a state in which the pressing rod portion D3 opens the second discharge port C6 by which the piston member D is inserted in the second cylindrical portion C2 of the chamber member C in an inner circumferential portion adjacent to the third opening portion C1 of the second cylindrical portion C2 of the chamber member C. The shape and dimensions of the annular fitting portion D4 and the annular fitted portion C9 are determined so that the fitting is not released due to an increase in inner pressure of the mixing portion A5.

## Description

### TECHNICAL FIELD

The present invention relates to a dental capsule container containing two kinds of components in isolation from each other, and to allow the two kinds of components to be mixed in the dental capsule container before being discharged, when in use.

### BACKGROUND FIELD

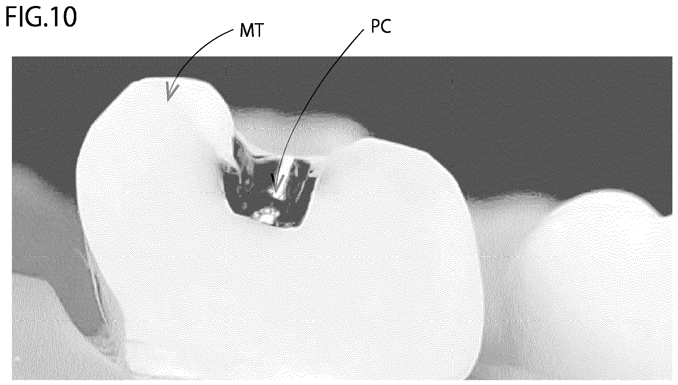

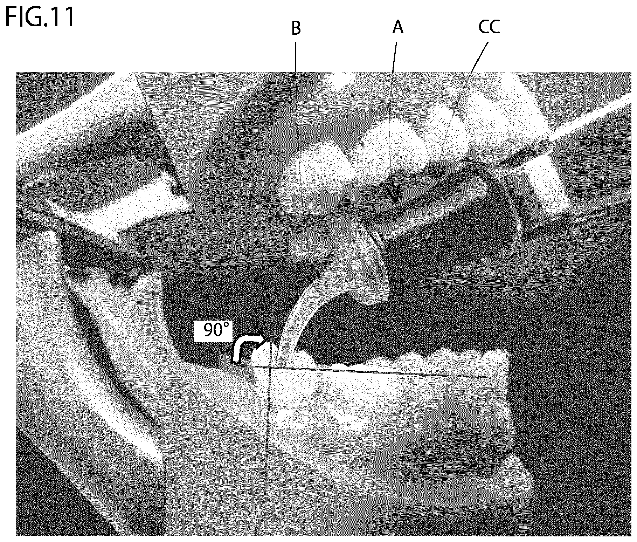

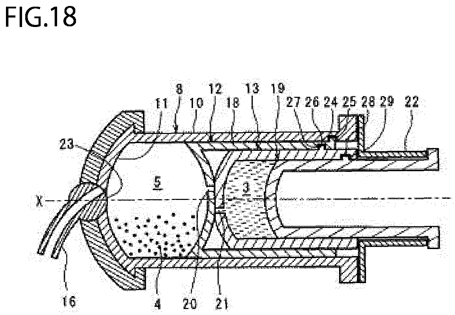

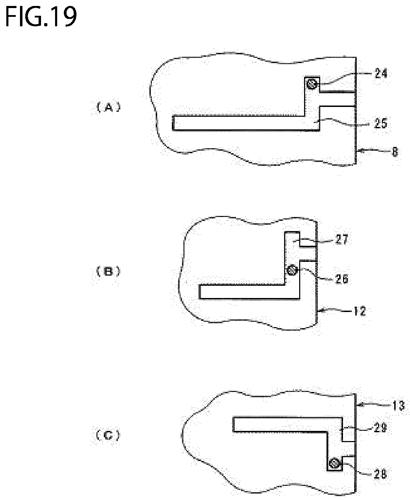

Japanese Patent No. 4,956,616 (Patent Document 1) discloses a conventional example of a dental capsule container, which looks like a dental cement capsule, isolating from each other and containing a powder material and a liquid material as two kinds of chemicals, and the powder material and the liquid material in the dental capsule container are discharged after having been mixed together in the dental capsule container. Figs. 18 and 19 of the present application are respectively corresponding to Figs. 10 and 11 of the Patent Document 1. Hereinafter, the structure of the conventional dental capsule container will be described below, as using Figs. 18 and 19 of the present application. The conventional dental capsule container includes a mixing cylinder 8 (a housing), a nozzle 16, partition wall members (12, 18), a discharging auxiliary body 13 (a chamber member) and an operating piston 19 (a piston member). The mixing cylinder 8 comprises an outer cylinder 10 (a first cylindrical portion) having a first opening portion at one end thereof and an ending wall 11 (a first bottom wall portion) closing the other end of the outer cylinder 10. In addition, the mixing cylinder 8 has a mixing room 5 (a mixing portion) therein configured to contain a first component and to mix a first component and a second component when the second component is injected from the one end of the outer cylinder, and includes a discharge port 23 at the ending wall 11 (the first bottom wall portion) configured to discharge a mixture of the first component and the second component from the mixing room 5 and provided at an ending wall 11 (the first bottom wall portion). The nozzle 16 is provided at the ending wall 11 (the first bottom wall portion) of the mixing cylinder 8.

Partition wall members (12, 18) comprise a cylinder portion 18 (a second cylindrical portion) including a second opening portion at one end thereof, a second bottom wall portion closing the other end of the cylinder portion 18 (the second cylindrical portion), and the partition wall members (12, 18) having an elastic partition wall 12 provided at the second bottom wall portion, whereby the partition wall members slide liquid-tightly inside the mixing room 5 in the mixing cylinder 8. In addition, the discharging auxiliary body 13 (the chamber member) is fitted in the partition wall members (12, 18) such that the discharging auxiliary body 13 may rotate about an axial line X. The discharging auxiliary body 13 (the chamber member) has a cylindrical portion including an opening portion at one end thereof and a bottom wall portion closing the other end of the cylindrical portion, and includes in its inside a dispensing room 3 (the second component containing portion) configured to contain the second component. Furthermore, the elastic partition wall 12 of the partition wall members (12, 18) is formed with a communicating through hole 20, and the bottom wall portion of the discharging auxiliary body 13 (the chamber member) is formed with a communicating through hole 21. When the discharging auxiliary body 13 (the chamber member) rotates about the axial line X by a predetermined angle and then the discharging auxiliary body 13 (the chamber member) and the partition wall members (12, 18) come into a predetermined positional relationship, the communicating through hole 20 and the communicating through hole 21 communicate with each other, thereby allowing the second component to flow into the mixing room 5.

Before an operation of mixing the first component and the second component is started, the conventional dental capsule container maintains a holding state in which the partition wall members (12, 18) are held in a retracted position so as to form the mixing room 5 in the mixing cylinder 8. By performing a predetermined first operation (an operation of rotation about the axial line X) on the operating rod portion of the operating piston 19 (the piston member) in this state, the communicating through hole 20 and the communicating through hole 21 are aligned to communicate each other. A communication passage comprising the communicating through holes

(20, 21) is thereby formed between the dispensing room 3 and the mixing room 5. The operating piston 19 is moved toward the end wall 11 of the mixing cylinder 8 after forming the communicating through holes and the second component in the dispensing room 3 is injected in the mixing room 5 through the formed communicating through holes (20, 21). Then, by performing an operation (a second operation) of rotation about the axial line X on the operating piston 19, the holding state of the partition wall members (12, 18) is released. In addition, in a state in which the nozzle 16 is moved from the first position to the second position (a position where the passage of the nozzle 16 and the discharge port 23 communicate with each other), the operating piston 19 is further moved toward the end wall 11 in this state to discharge the mixture from the inside the mixing room 5 to an outside through the nozzle 16. Note that an engagement relationship between the mixing cylinder 8 and the partition wall members (12, 18), an engagement relationship between the partition wall members (12, 18) and the discharging auxiliary body 13 (the chamber member) and an engagement relationship between the discharging auxiliary body 13 (the chamber member) and the operating piston 19 (the piston member) are achieved by an engagement between projections (24, 26, 28) and guide grooves (25, 27, 29) illustrated in Fig. 17 of the present application (Fig. 11 of the Patent Document 1).

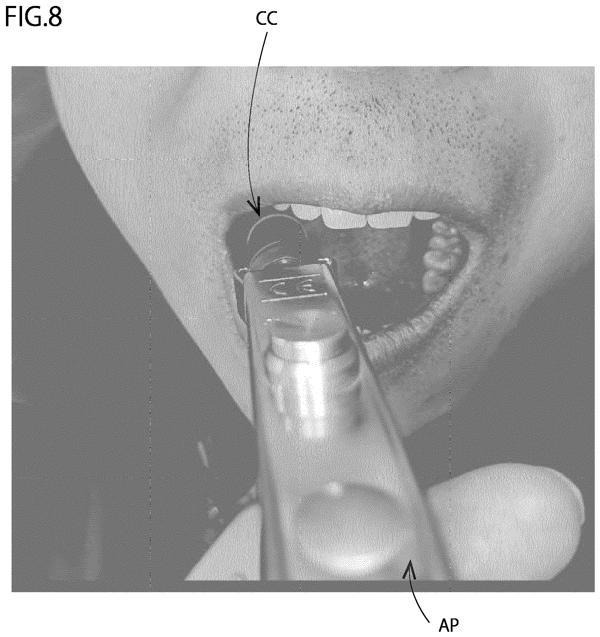

The projection 28 is prevented from moving in the axial line direction relative to the guide groove 29 illustrated in Fig. 8C before pushing the operating piston 19 into the discharging auxiliary body 13 (the chamber member). In addition, the projection 28 is moved into an elongated groove portion of the guide groove 29 extending in the direction of the axial line X, the operating piston 19 is moved forward in the direction of the axial line X and the second component in the dispensing room 3 is pushed into the mixing room 5 when pushing the operating piston 19 into the discharging auxiliary body 13 (the chamber member). Then, the projection 28 is left in a state in which the projection 28 can be moved rearward in the direction of the axial line X.

Furthermore, Japanese Published Application No. 2022-542832 (Patent Document 2) also discloses a dental capsule container made up of multiple members comprising a mixing cylinder, a partition wall member and a piston member as same as disclosed in the Patent Document 1. In the Figs. 12 and 14 of the Patent Document 2, an engagement structure temporarily engaged and comprising outer peripheral ribs 56, 56' and inner peripheral grooves 46, 46' being provided between a container 4 as a second component containing member and a plunger 5 (a piston member) as a piston member that pushes the second material out of the container 4. The outer circumferential rib 56 is in a state being engaged with the inner peripheral groove 46' in a state in which the plunger 5 as a piston member is pushed deep into the container 4 as the second component containing member. However, as illustrated in Fig. 12 of the Patent Document 2, the inner peripheral groove 46' is shaped to temporarily prevent the plunger 5 from moving forward, but is shaped not to prevent the plunger 5 from moving backward. Furthermore, the nozzle 20 illustrated in the Patent Document 2 has the shape that linearly extends.

### Related Art Documents

### Patent Documents

Patent Document 1: Japanese Patent No. 4,956,616 (February 19, 2009) (Figs. 10 and 11)
Patent Document 2: Japanese Published Application No. 2022-542832 (October 7, 2022) (Figs. 12 and 14)

### SUMMARY OF INVENTION

### TECHNICAL PROBLEM

For storage stability, it is necessary to improve airtightness even in the structure illustrated in the Patent Document 1. Therefore, since higher may be better with respect to the airtightness of the mixing room 5 and the dispensing room 3, designs of which the airtightness of the mixing room 5 and the dispensing room 3 is high are expected. Then, when the mixing room 5 and the dispensing room 3 are designed to have improved airtightness, a defect of which the piston member was pushed back due to inner pressure rising of the mixing room 5 and the dispensing room 3 was confirmed when pushing the piston member into the mixing room 5 and the dispensing room. In addition, the fact that a part of the second component flows back into the dispensing room (the second component containing portion) has been also confirmed by the inventors of the present invention. Therefore, if a pressing force is not constantly applied to the piston member, a problem will arise in which it will be impossible to prevent backflow from the conventional dental capsule container.

In addition, in the case that dental fluid is filled on the bottom of the patient's molar cavity from a nozzle of a dental capsule container, it is preferrable to insert the tip of the nozzle into the cavity and place at an angle of 90° to the bottom of the cavity or to start filling as close as possible to the cavity floor. Consequently, the fluid spreads evenly over the bottom of the cavity, allowing for precise filling without trapping air bubbles. However, when the work is practically conducted, it is not easy to visually grasp the positional relationship between the tip of the nozzle and the bottom of the cavity since the part of the dental capsule container housing enters the mouth along with the nozzle. When the curved nozzle 16 illustrated in the above-mentioned Patent Document 1 is used, the nozzle 16 is arranged from the first position to the second position (the position where the passage of the nozzle 16 communicates with the discharge port 23), and the operating piston 19 is further moved toward the partition wall 11 to fill the mixture from inside the mixing portion 5. In this case, ideally, the tip of the nozzle 16 is at an angle of 90° with respect to the bottom surface of the cavity, and the mixture is discharged to the outside through the nozzle 16. There is no guarantee that the nozzle 16 will always be used at a fixed angle to the mixing cylinder 8 (housing) since the mixture can be ejected to the outside through the nozzle 16 even if at least part of the passage of the nozzle 16 and the discharge port 23 is in a communication state. In addition, since the size of the nozzle 16 is also not determined with careful consideration for a patient's mouth opening or dentist's workability, it is required skilled techniques to fill the cavity with the mixture while angling the tip of the nozzle 16 at an angle of 90° to the bottom of the cavity. In addition, a problem that it is also difficult to reliably fill the cavity with the fluid while watching the tip of the nozzle in a movable nozzle such as the nozzle illustrated in the Patent Document 1 since the nozzle length is limited, so the distance between the housing and the nozzle tip becomes short, and the visibility of the tip of the nozzle decreases.

In addition, it is difficult for the linear nozzle 20 illustrated in the above-mentioned Patent Document 2 to fill the mixture with the cavity with the tip of the nozzle 20 at an angle of 90° to the bottom of the cavity if a patient does not open his or her mouth wide to increase the angle range of the nozzle inserted into the oral cavity. Therefore, a problem that it is also difficult for dentists to reliably fill the cavity with the mixture while watching the tip of the nozzle in addition to increase physical burden on the patient when filling the bottom of the cavity with the mixture will be caused. Note that the Patent Document 2 describes that the nozzle 20 is a "deformable ejection nozzle" so that the Patent Document 2 look like suggesting that the dentists can fold the nozzle 20 to any angle for use. However, a problem that it is difficult for the dentists to fold the nozzle at an ideal shape.

A purpose of the present invention is to provide a dental capsule container in which the backflow can be prevented even if the pressing force is not constantly applied to the piston member.

The other purpose of the present invention is to provide a dental capsule container including a nozzle in which the tip of the nozzle can be inserted in the cavity at an ideal angle with the reduced physical burden on the patient and allowing the dentist to see the tip of the nozzle.

### SOLUTION TO PROBLEM

Hereinafter, for obtaining an easier understanding, means that solves the problems will be described with reference to the accompanying drawings, but the reference numerals are not used as a basis for limiting the present invention to the embodiments.

A dental capsule container according to a first aspect of the present invention includes a housing A, a nozzle B, a chamber member C and a piston member D. The housing A includes a first cylindrical portion A4 having a first opening portion A1 provided at one end of the first cylindrical portion A4, a second opening portion A2 provided at the other end of the first cylindrical portion A4, a partition wall portion A3 adjacent to the second opening portion A2, and a mixing portion A5 in which a first component is contained within a region extending from the partition wall portion A3 toward the first opening portion A1 side and into which the second component is injected from the first opening portion A1 side to mix the first component and the second component, a first discharge port A6 provided at the partition wall portion A3 and discharging a mixture from the mixing portion A5, and a first closing portion A7 releasably closing the first discharge port A6. The nozzle B is provided at the first cylindrical portion A4 of the housing A and discharges the mixture discharged from the first discharge port A6. The first component and the second component may be any combination of two types of components comprising a powder component, a liquid component, or a paste component that require mixing or kneading. Typically, the first component and the second component are often formed as a combination of a powder component and a liquid component.

Note that the nozzle B may be separated from the housing A or may be integral with the housing A. The chamber member C includes a second cylindrical portion C2 having a third opening portion C1 at one end of the second cylindrical portion C2, a bottom wall portion C3 closing the other end of the second cylindrical portion C2, a second component containing portion C4 containing the second component, a second discharge port C5 provided at the bottom wall portion C3 and discharging the second component from the second component containing portion C4 into the mixing portion A5, and a second closing portion C6 releasably closing the second discharge port C5. In addition, the chamber member C slides within the first cylindrical portion A4 of the housing A. The piston member D includes a piston portion D1 inserted from the third opening portion into the second cylindrical portion C2 and sliding within the second cylindrical portion C2, an operating portion D2 provided at a rear end of the piston portion D1, and a pressing rod portion D3 provided at a front end of the piston portion D1 and opening the second discharge port C5 in an opening state for the second discharge port C5 by pushing the second closing portion C6 when the operating portion D2 is pushed toward the nozzle B, and opening the first discharge port A6 by pushing the first closing portion A7 provided at the partition wall portion A3 of the housing A when the operating portion D2 is further pushed.

In the present invention, an annular fitting portion D4 extending in a radial direction and a circumferential direction is formed at an end close to the operating portion D2 of the piston portion D1 of the piston member D. Furthermore, an annular fitted portion C9 is formed on an inner circumferential portion of the second cylindrical portion C2 adjacent to the third opening portion C1 of the second cylindrical portion C2 of the chamber member C, into which the annular fitting portion D4 is fitted when the piston member D is inserted into the second cylindrical portion C2 of the chamber member C so that the pressing rod portion D3 opens the second closing portion C6. In addition, the shapes and dimensions of the annular fitting portion D4 and the annular fitted portion C9 are determined so that the fitting between the annular fitting portion D4 and the annular fitted portion C9 is not released due to an increase in inner pressure of the mixing portion A5.

The second component begins to enter the mixing portion A5 in a state that the second discharge port C5 is opened by which the pressing rod portion D3 pushes and opens the second closing portion C6 by which the piston member D is pushed into the chamber member C. Furthermore, the second component is moved into the mixing portion A5 from the second component containing portion C4 in the chamber member C by which the operating portion D2 of the piston member D is pushed. In the moving state mentioned above, the annular fitting portion D4 is engaged with the annular fitted portion C9. If the engagement is released, the second component that has been entered the mixing portion A5 backflows into the second component containing portion C4. If the backflow is occurred, it may be a problem that poor mixing is occurred since the amount of the second component to be mixed is decreasing.

After that, the first component and the second component both contained in the mixing portion A5 are mixed by which a dental capsule container is implemented in a vibration device and is then vibrated or rotated therein. If the piston member D that the annular fitting portion D4 engaged with the annular fitted portion C9 and became together with the annular fitted portion C9 and the chamber member C are further pushed in by using a jig after that the mixing process has been completed, the inner pressure in the mixing portion A5 is getting increased since the piston member D and the chamber member C are moved to the nozzle B in the mixing portion A5 while compressing the mixture in the mixing portion A5. When the piston member D and the chamber member C are further pushed in after the process mentioned above, the inner pressure in the mixing portion A5 is getting more increased until that the pressing rod portion D3 pushes the first closing portion A7 provided at the partition wall portion A3 of the housing A and opens the first discharge port A6. In the case that the inner pressure in the mixing portion A5 is increased, a force is applied to the piston portion D1 of the piston member D in a direction to push the piston member D out of the chamber member C through the second discharge port C5. If the engagement between the annular fitting portion D4 and the annular fitted portion C9 is released due to weak engagement, the second component in the mixing portion A5 may backflow into the second component containing portion C4. In addition, in the case that the second component remains in the second component containing portion C4 by the backflow of the second component explained above, it may be a problem that the remained second component is ejected from the nozzle B in a state that the second component is separated from the mixture (not uniform) when ejecting the mixture of the second component entered in the mixing portion A5 and the first component. However, in the present embodiment, the shapes and dimensions of the annular fitting portion D4 and the annular fitted portion C9 are determined so as not to release the engagement by increasing the inner pressure of the mixing portion A5 so that the problem that the second component flows back is not occurred. According to the present embodiment, the dental capsule container that can mix the first component and the second component in the appropriate proportions in the mixing portion can be provided even if the pressing force is not constantly applied to the piston member.

The annular fitting portion D4 may be a circular annular projection projecting radially outward and extending in the circumferential direction, and the annular fitted portion C9 may be a circular annular recess opening radially inward to inside in the radial direction and extending in the circumferential direction. Conversely, the annular fitting portion D4 may be a circular annular recess opening radially inward and extending in the circumferential direction, and the annular fitted portion C9 may be a circular annular projection projecting radially outward and extending in the circumferential direction.

Note that one or more other circular projections D5 projecting radially outward and extending in the circumferential direction may be formed at an end close to the pressing rod portion D3 of the piston portion D1 of the piston member D. In the case explained above, an annular compression area surface C12 compressing the one or more of the other circular annular projections D5 is formed in a certain area from a position beyond the circular fitted portion C9 toward the bottom wall portion C3 at the inner circumferential portion of the second cylindrical portion C2 of the chamber member C. In addition, a reverse tapered annular compression release area surface C13 expanding outward in the radial direction is formed so as to gradually release compression of the one or more of other circular projections D5 in another area at the inner circumferential portion from the compression area surface C12 toward the bottom wall portion C3. Furthermore, a contact surface C15 contacting an inner circumferential surface of the housing A is formed in an outer circumferential portion close to the bottom wall portion C3 of the chamber member C. The compression release area surface C13 is formed as including a central portion in a whole area of the inner circumferential portion between the third opening portion C1 and the bottom wall portion C3. Consequently, the feature that prevents the piston member D from regressing due to increasing the inner pressure when pressing the piston member D into can be obtained by which the compression release area surface C13 is reverse tapered. In addition, in the case that the compression release area surface C13 is reverse tapered, it is possible to suppress a decrease in the sliding property between the contact surface C15 and the inner surface of the housing A since the deformation of the contact surface C15 provided at the outer periphery of the chamber member C (a deformation in which the outer diameter of the contact surface C15 increases) is suppressed even if the circular projection portion D5 enters into the front end portion.

One or more air release passages A13 that release air to the space between the inner peripheral portion of the housing A and chamber member C may be formed in a state that the first closing portion A7 is pushed by the pressing rod portion D3 of the piston member D in the inner peripheral portion of the housing A. In the case mentioned above, the one or more air release passages A13 can release air remained in the mixing portion A5 through the first opening portion A1 of the housing A are formed in an inner circumferential portion of the first cylindrical portion A4 of the housing A, from the time when both the chamber member C and the piston member D started moving toward the partition wall portion A3 of the housing A in a state in which the second closing portion C6 of the chamber member C is pushed open by the pressing rod portion D3 and the piston portion D1 contacts with the bottom wall portion C3 of the chamber member C, until the time when immediately before the bottom wall portion C3 of the chamber member C comes into contact with the partition wall portion A3. Note that the time when immediately before means the time when the contact surface C15 no longer faces the one or more air release passages A13.

By providing the one or more air release passages A13 explained above, the workability is improved since the resistant force that gradually increases when the chamber member C slides can be prevented from growing. In addition, the destruction of the housing A due to an increase in the inner pressure can be suppressed.

The air release passage A13 can be constituted by a long and thin groove or a passage formed between two long and thin projections. Note that the radial dimension of the long and thin groove is 0.05-0.25mm or the radial dimension of the long and thin projection is 0.08-0.18mm. In the above-mentioned range of size, the air releasing can be achieved with keeping the state that the mixture in the mixing portion does not easily pass through the air release passages A13.

Furthermore, it is preferable that a flange portion C7 projecting outside the radial dimension of the second cylindrical portion C2 is provided at an end close to the third opening portion C1 of the second cylindrical portion C2 of the chamber member C. In addition, one or more recesses C8 opening toward the direction to which the second cylindrical portion C2 extends and outside the radial dimension are formed at the flange portion C7. Note that the one or more recesses C8 allow deformation of the flange portion C7 when the chamber member C slides within the container body A, and also function as paths for allowing air passing between the chamber C and the housing A from the mixing portion A5.

In addition, it is preferable that the pressing rod portion D3 of the piston member D has a configuration that a plurality of ribs D3a extending in a longitudinal direction are circumferentially arranged spaced apart. Note that the tip portions D3b of the ribs D3a may converge one point or may not converge one point but each of the tip portions D3b may terminate in a flat surface. Consequently, the second closing portion C6 provide at the chamber member C is smoothly pushed open and the second component is easily injected into the mixing portion A5.

Note that it is preferable that the plurality of ribs D3a are n or more (n is an integer of 2 or more) ribs arranged at a predetermined interval in a circumferential direction, and the second closing portion C6 is configured by m or more (m is an integer greater than 3 and not an integer multiple of n) divided closing pieces C6a-C6d to be connected so as to close the second discharge port C5 liquid-tightly. In the case that the ribs D3a and the divided closing pieces C6a to C6d are provided in equal numbers and at equal intervals, it can be thought that each separated closing piece C6a to C6d one by one gets in the space between the rib D3a and the rib D3a depending on the position of the pressing rod portion D3 and the chamber member C in the rotation direction, even if the pressing rod portion D3 releases the second closing portion C6. In the above-mentioned case, the resulting opening area is extremely narrow. When the relationship between the number of ribs n and the number of divided closing pieces C6a to C6d m is set as the present invention mentioned above, it can be prevented the opening area from being extremely narrower since each divided closing piece C6a to C6d one by one does not get in the space between the rib D3a and the rib D3a.

Note that it is preferable that the m divided closing pieces C6a-C6d are respectively connected with the periphery of the second discharge port C5 by a permanently connected structure portion C10 not separated from the second discharge port C5 even when being pushed by the pressing rod portion D3, and furthermore, each of the m divided closing pieces C6a-C6d is interconnected by a provisionally connected structure portion C11 being separated when being pushed by the pressing rod portion D3. When adopting these configurations mentioned above, the second closing portion C6 can be surely opened, the opened second closing portion C6 cannot be an obstacle and the second component can be surely pushed into the mixing portion A5.

Note that the second cylindrical portion C2, the bottom wall portion C3 and the second closing portion C6 of the chamber member C are formed by integral molding, and the thickness dimensions of the permanently connected structure portion C10 connecting the m divided closing pieces C6a-C6d with the second discharge port C5 may be thicker than thickness dimensions of the provisionally connected structure portion C11 interconnecting to the m divided closing pieces C6a-C6d. Consequently, the second closing portion C6 of the chamber member C is easily molded and the m divided closing pieces C6a to C6d become no obstacle due to being separated in the mixing portion A5 after the second closing portion C6 is opened.

In addition, the first closing portion A7 of the housing A may be configured by one closing piece A71 closing the first discharge port A6. In this case, the one part of the outer circumferential portion of the one closing piece A71 is connected to the periphery of the first discharge port A6 by a permanently connected structure A8 not separated from the periphery of the first discharge port A6 even when being pushed by the pressing rod portion D3. Further, remaining part of the outer circumferential portion of the one closing piece A71 is connected to the periphery of the first discharge port A6 by a provisionally connected structure A9 being separated when being pushed by the pressing rod portion D3. In addition, a connection portion A10 to which the nozzle B is connected is integrally formed at the housing A and a communication passage A11 communicating the first discharge port A6 with a discharge passage B1 of the nozzle B may be formed at the connection portion A10. In the case mentioned above, it is preferable that one surface positioned at the mixing portion A5 side of the one closing piece A71 is configured by a curved surface A7a that is curved so as to project toward the first opening portion A1. Further, it is preferable that the shape of other surface 7Ab positioned at the opposite side to the curved surface A7a of the one closing piece A71 and the shape of the communication passage A11 formed at the connection portion A10 are defined so as not to block the movement of the pressing rod portion D3 which comes into the communication passage A11 while pushing the one closing piece A71. Consequently, the one closing piece A71 does not become a bigger obstacle and the mixture is smoothly discharged since the curved surface A7a of the one of the closing pieces A71 faces the communication passage A11 even if the mixture generated in the mixing portion A5 has viscosity.

Note that if the other surface of the one closing piece A71 is a flat surface, it is possible to increase the inclination angle of one closing piece A71 when it is displaced into the communication passage A11. In the case above mentioned, it is preferable that the contour shape of the one closing piece A71 is circular, the shape of the communication passage A11 is cylindrical and the diameter size of the communication passage A11 is 1.05 times or more larger than the diameter size of the contour of the one closing piece A71. Consequently, it can be prevented the one closing piece A71 from being an obstacle with respect to the discharge of the mixture.

A dental capsule container according to the second aspect of the present invention comprises a housing A including a cylindrical portion A4 having a first opening portion A1 provided at one end of the cylindrical portion A4, a second opening portion A2 provided at the other end of the cylindrical portion A4, and a partition wall portion A3 adjacent to the second opening portion A2, further being filled by a fluid object used in dental treatment in a region extending from the partition wall portion A3 toward the first opening portion A1 side, and a discharge port A6 provided at the partition wall portion A3 and discharging the flowable dental fluid object, a nozzle B provided at the cylindrical portion A4 of the housing A and discharging the flowable dental fluid discharged from the discharge port, and sliding members (C, D) sliding within the cylindrical portion of the housing A.

A nozzle B includes a nozzle body B4 having a discharge passage B1 therein which guides fluid object discharged from a discharge port A6 to an ejection port B0 and a base portion B3 that fixes the nozzle body B4. In addition, the nozzle body B4 has a curved shape that gradually curves from the discharge port A6 toward the discharge port B0 in a direction away from the axis line X that extends in the longitudinal direction through a center of the cylindrical portion A4 and the discharge passage B1 has a shape that a cross-sectional area of the discharge passage B1 gradually decreases from the discharge port A6 toward the discharge port B0.

In the second aspect of the present invention, the tip portion of the nozzle body B4 located at a farthest position from the cylindrical portion A4 is defined as an outermost edge B4a and a tip portion of the nozzle body B4 opposed to the outermost edge portion B4a of the nozzle body is defined as an opposite edge portion B4b in order to define the shape of the nozzle B. Then, an intersecting point between a first virtual line L1 passing through the outermost edge portion B4a and extending in a direction perpendicular to the axis line X and the axis line X is defined as a first intersecting point CP1 and a distance between the axis line X and an virtual parallel line PL that passes through the opposite edge portion B4b and extends parallel to the axis line X is defined as a first distance DS1. Furthermore, an angle between the axis line (X) and a second virtual line (L2) that is located within a virtual plane (S), passes through the first intersection point (CP1), and is a tangent line to an outer surface of the base portion B3 is defined as θ1, the virtual plane (S) including the first intersection point (CP1), the outermost edge portion (B4a), the tip opposing portion (B4b), and the axis line X. Then, a intersecting point between the second virtual line L2 and the outer surface of the base portion B3 is defined as a second intersecting point CP2, an intersecting point between a third virtual line L3 passing through the second intersecting point CP2 and perpendicular to the axis line X and extending beyond the axis line X and an outer surface of the base portion B3 is defined as a third intersecting point CP3, a distance between the second intersecting point CP2 and the third intersecting point CP3 is defined as a second distance DS2, a shortest distance between the third intersecting point CP3 and the virtual parallel line PL is defined as a third distance DS3, and a shortest distance between the outermost edge portion B4a and the third virtual line L3 is defined as a fourth distance DS4. In addition, in the present invention, the definitions are set as defined above and the angles and lengths are limited as follows.

The angle θ1 is set to an angle within 18.0°-23.0°.

The first distance DS1 is set to a length within 7.8mm-10.8mm.

The second distance DS2 is set to a length within 10.0mm-14.0mm.

The third distance DS3 is set to a length within 1.5mm-4. 7mm.

The fourth distance DS4 is set to a length within 14.8mm-18.8mm

Then, the curved shape of the nozzle body B4 is a shape in which a center line CL extending through a center of the discharge passage B1 in the direction in which the nozzle body B4 extends, extends along a virtual circular arc CA having a radius of curvature R within 18.0mm-21.5mm and having a radius center on the third virtual line L3, the virtual circular arc CA passing through a intersecting point (P1) between the axis line (X) and the third virtual line (L3) and a center point (P2) of the discharge port (B0). In this specification, the center line CL extending along the virtual circular arc CA does not only mean a state in which the center line CL extends in perfect agreement with the virtual circular arc CA, but also naturally includes a state in which the center line CL extends with a radial gap (or extends radially spaced apart) from virtual circular arc CA.

If the shape of a nozzle of a dental capsule container is defined as well as the present invention, when the nozzle and container body are inserted into the patient's mouth, the dentist can easily visually confirm that the tip of the nozzle is entering the opening of the cavity of the patient's molar tooth. Therefore, the present invention can provide a dental capsule container including a nozzle in which the tip of the nozzle can be inserted in the cavity at an ideal angle with the reduced physical burden on the patient and allowing the dentist to see the tip of the nozzle without varying the shape of the nozzle. Dimensions and angles of each part defined in the present invention are the ranges of a maximum value and a minimum value that have been found through many experiments, the effect of the invention does not arise from the individual dimension or angle of each part alone. In addition, the meaning that the dimension and angle of each part are the maximum value and minimum value is that the above-mentioned dimension and angle show the allowable range in the case that a high-skilled dentist uses the dental capsule container of the present invention so that the above-mentioned dimension and angle are varied relative to the experience level of a dentist.

The dimension and angle of each part for the dental capsule container of the present invention being suitable for a mid-career dentist who is more skilled than a novice dentist but less skilled than an experienced dentist are preferably as follows.

The angle θ1 is set in an angle range within 19.5°-22.5°.

The first distance DS1 is set in a length range within 8.3mm-10.3mm.

The second distance DS2 is set in a length range within 11.0mm-13.5mm.

The third distance DS3 is set in a length range within 2.5mm-4.5mm.

The fourth distance DS4 is set in a length range within 15.8mm-17.8mm.

The radius of curvature R is set in a length range within 18.5mm-21.3mm.

The dimension and angle of each part for the dental capsule container of the present invention being suitable for a lot of dentists from a novice dentist to an experienced dentist are preferably as follows.

The θ1 is set in an angle range within 20.5°-21.5°.

The first distance DS1 is set in a length range within 9.0mm-9.8mm.

The second distance DS2 is set in a length range within 12.2mm-13.2mm.

The third distance DS3 is set in a length range within 3.5mm-4.3mm.

The fourth distance DS4 is set in a length range within 16.4mm-17.4mm.

The radius of curvature R is set in a length range within 18.8mm-19.5mm.

Note that if an angle θ2 between a portion (CL1) of the center line (CL) located within 3mm from the discharge port (B0) of the discharge passage (B1) and the virtual parallel line (PL) is in the range of 52° to 70°, more preferably, 52° to 58°,when the nozzle and container body are inserted into the patient's mouth, the dentist is clearly sure to easily visually confirm that the tip of the nozzle is entering the opening of the cavity of the patient's molar tooth.

The thickness of the wall portion surrounding the discharge passage (B1) of the nozzle body is that the thickness dimension of the base portion (B3) side is thicker than the thickness dimension of the discharge port side. In the case that the thickness gradually decreases toward the ejection port, the required strength of the nozzle can be ensured even if the length of the nozzle is increased as the present invention.

### BRIEF DESCRIPTION OF DRAWINGS

Fig. 1 is a diagram illustrating a cross-sectional view of a dental capsule container according to an embodiment of the present invention, taken along a line including the central axis line.
Fig. 2 is a diagram illustrating a side view of the dental capsule container after the mixture has been pushed out.
Fig. 3A is a diagram illustrating a cross-sectional view of the housing taken along the central axis line. Fig. 3B is a diagram illustrating a view of the housing seen from the first opening portion side. Fig. 3C is a diagram illustrating an enlarged view of the region RC in Fig. 3A. Fig. 3D is a diagram illustrating an enlarged view of the region RD in Fig. 3A. Fig. 3E is a diagram illustrating a cross-sectional view of the release passage. Fig. 3F is a diagram illustrating a cross-sectional view of the release passage of a modified example.
Fig. 4A is a diagram illustrating a cross-sectional view taken along line A-A including the central axis line of the chamber member illustrated in Fig. 4C. Fig. 4B is a diagram illustrating a half cross-sectional view taken along the central axis line of the chamber member. Fig. 4C is a diagram illustrating a view of the chamber member seen from the third opening portion side. Fig. 4D is a diagram illustrating an enlarged view of the region RD in Fig. 4A.
Fig. 5A is a diagram illustrating a side view of the piston member. Fig. 5B is a diagram illustrating a side view seen from the pressing rod portion side of the piston member in Fig. 5A. Fig. 5C is a diagram illustrating an enlarged view of the region RC in Fig. 5A. Fig. 5D is a diagram illustrating an enlarged view of the region RD in Fig. 5A.
Figs. 6A to 6E are diagrams illustrating cross-sectional views for sequentially explaining the movement of the dental capsule container.
Fig. 7 is a diagram illustrating an enlarged cross-sectional view of the nozzle used in the present embodiments.
Fig. 8 is a photograph instead of a drawing used for explaining a test (experiment?) method for confirming the feature of the dental capsule container of the present embodiment.
Fig.9 is a photograph instead of a drawing showing a state that opposing teeth have an average opening angle.
Fig. 10 is a photograph instead of a drawing showing a cavity formed in molar tooth of artificial tooth.
Fig. 11 is a photograph instead of a drawing showing a state that the nozzle of the dental capsule container of the present embodiment is perpendicular to the bottom surface of the cavity formed in the molar tooth.
Fig. 12 is a photograph instead of a drawing showing a state that the dental capsule container of the present embodiment is placed almost horizontally with respect to the dentition.
Fig. 13 is a photograph instead of a drawing used for explaining a used state in case of using a comparative dental capsule container having a nozzle that does not meet the limited range of the nozzle used in the present invention.
Fig. 14 is a photograph instead of a drawing showing a used state in case of using a comparative dental capsule container having a nozzle that does not meet the limited range of the nozzle used in the present invention.
Fig. 15 is a diagram for explaining the dimension and angle of each part of a comparative dental capsule container.
Fig. 16A is a photograph instead of a drawing simulating a state that a dentist sees when the dental capsule container of the present embodiment is inserted in the mouth of a patient with the same condition set as Fig. 11. Fig 16B is a photograph instead of a partially enlarged drawing shown in Fig. 16A.
Fig. 17A is a photograph instead of a drawing simulating a state that a dentist sees when a comparative dental capsule container is inserted in the mouth of a patient with the same condition set as Fig. 11. Fig. 17B is a photograph instead of a partially enlarged drawing shown in Fig. 17A.
Fig. 18 is a diagram illustrating Fig. 10 of

### Patent Document 1.

Fig. 19 is a diagram illustrating Fig. 11 of Patent Document 1.

### DESCRIPTION OF EMBODIMENTS

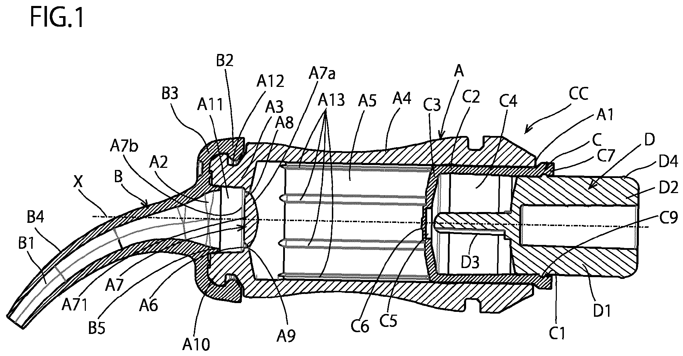

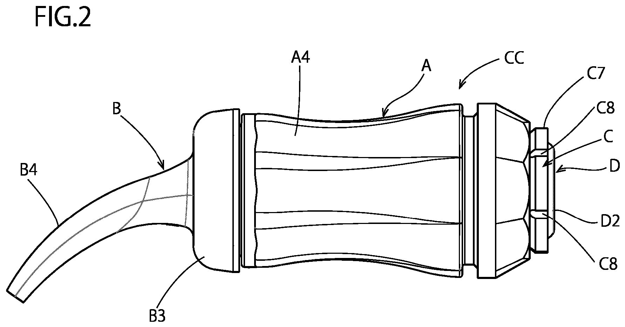

An example of an embodiment of a dental capsule container according to the first aspect of the present invention will be described below in detail with reference to drawings. Fig. 1 is a diagram illustrating a cross-sectional view of a dental capsule container CC according to the embodiment, taken along a line including the central axis line X. Fig. 2 is a diagram illustrating a side view of the dental capsule container CC after the mixture has been pushed out. In these Figures, the dental capsule container CC includes a cylindrical housing A, a nozzle B, a chamber member C and a piston member D integrally molded by resin material, respectively.

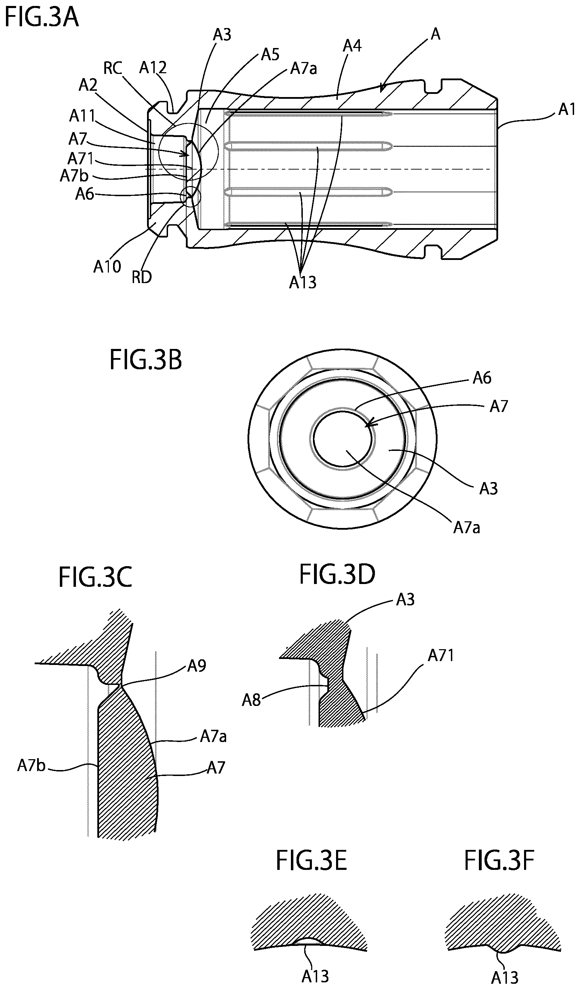

As illustrated in Figs. 1 and 3A, the housing A includes a first opening portion A1 at one end thereof, a second opening portion A2 at the other end thereof and a first cylindrical portion A4 having a partition wall portion A3 adjacent to the second opening portion A2. The first cylindrical portion A4 includes a mixing portion A5 configured to store a powder material as a first component in a region from the partition wall portion A3 toward the first opening portion A1 side and configures to mix the first component with a second component when injecting the second component from the first opening portion A1 side. Note that the first component and the second component may be in powder form or liquid form.

In addition, the first cylindrical portion A4 includes a first discharge port A6 provided at the partition wall portion A3 and configured to discharge a mixture from the mixing portion A5, and a first closing portion A7 configured to releasably close the first discharge port A6.

In the present embodiment, the first closing portion A7 is configured by one closing piece A71 closing the first discharge port A6. As illustrated as an enlarged diagram in Fig. 3D, the one closing piece A71 is configured to connect a part of an outer peripheral portion of the one closing piece A71 with an outer peripheral portion of the first discharge port A6 by a permanently connected structure A8 not separated from the outer peripheral portion of the first discharge port A6 even when pushed by a pressing rod portion D3 as described below. The thickness of the permanently connected structure A8 is thicker than the thickness of a provisionally connected structure A9 as described below. Consequently, the permanently connected structure A8 is permanently remained.

In addition, as enlarged and illustrated in Fig. 3B, a remained portion of an outer peripheral portion of the one closing piece A71 is connected to a peripheral portion of the first discharge port A6 by the provisionally connected structure A9 that separates when pushed by the pressing rod portion. One surface positioned at the mixing portion A5 side of the one closing piece A71 is configured by a curved surface A7a curving as projecting toward the first opening portion A1, and the other surface of the one closing piece A71 is configured by a flat surface A7b. The function of the curved surface A7a and the flat surface A7b will be described later.

Furthermore, a communication portion A10 with which a nozzle B is connected is integrally formed at the first cylindrical portion A4 of the housing A. A communication passage A11 by which the discharge port is connected with a discharge passage B1 of the nozzle B is formed at the connecting portion A10. The shape of the other surface (A7b) positioned at an opposite side of the curved surface A7a of the one closing piece A71 and the shape of the communication passage A11 formed at the connecting portion A10 are defined by which the movement of the pressing rod portion D3 entering the communication passage A11 while pushing the one closing piece A71 is not blocked. Consequently, the effect that the one closing piece A71 does not become a major obstacle and a mixture can be discharged smoothly is obtained since the curved surface A7a of the one closing piece A71 faces the communication passage A11 even if the mixture generated in the mixing potion A5 has viscosity. A tilt angle of the one closing piece A71 can be larger when the one closing piece A71 is displaced into the communication passage A11 if the other surface of the one closing piece A71 is the flat surface A7b. In the present embodiment, in order to surely obtain the above-mentioned effect, the contour shape of the one closing piece A71 is circular, the shape of the communication passage A11 is cylindrical and the diameter size of the communication passage A11 is 1.05 times or more larger than the diameter size of the contour of the one closing piece A71.

The nozzle B includes a base portion B3 having a circular annular projection portion B2 provided at an outer peripheral of the connecting portion A10 of the first cylindrical portion A4 of the housing A and configured to be fitted by a circular annular recess portion A12 extending along the outer peripheral of the connecting portion A10, and a nozzle body B4 integrally provided with the base portion B3 and configured to be equipped with a discharge passage B1 inside. Inside the base portion B3, the nozzle B also includes an annular portion B5 fitted into the communication passage A11 formed at the connecting portion A10. A mixture came out of the first discharge port A6 is discharged from the nozzle body B4. Note that the nozzle B may be provided separately from the housing A or may be provided integrally with the housing A.

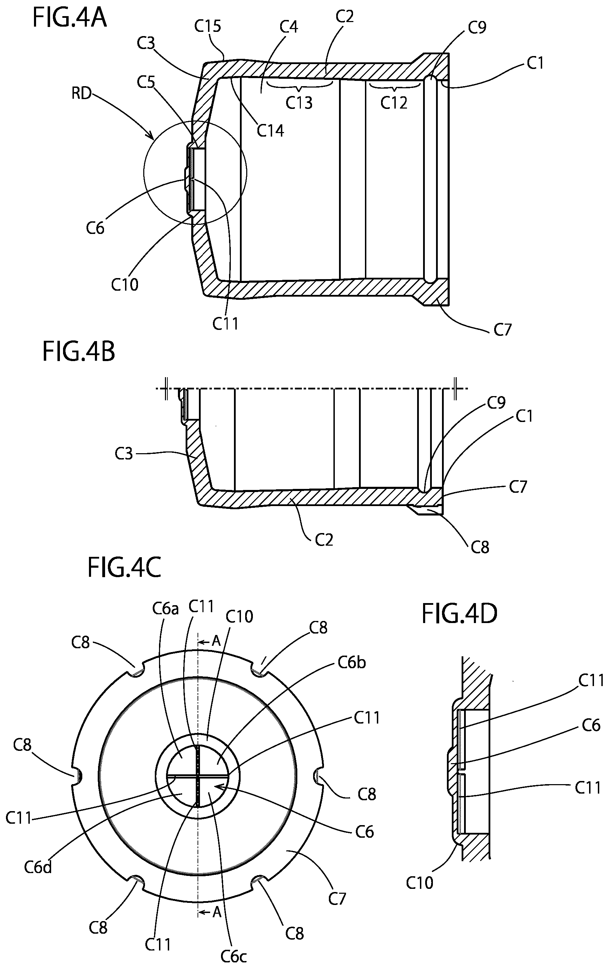

As illustrated in Fig. 1 and Figs. 4A to 4D, the chamber member C slides within the first cylindrical portion A4 of the housing A. The chamber member C includes a second cylindrical portion C2 having a third opening portion at one end thereof, a bottom wall portion C3 closing the other end of the second cylindrical portion C2, a second component containing portion C4 containing the second component, a second discharge port C5 provided at the bottom wall portion C3 and configured to discharge the second component from the second component containing portion C4 into the mixing portion A5 and a second closing portion C6 releasably closing the second discharge port C5. A flange portion C7 projecting toward an outer side in a radial direction of the second cylindrical portion C2 is provided at the end close to the third opening portion C1 of the second cylindrical portion C2 of the chamber member C7. One or more of recesses or concave portions C8 configured to open toward an outer side in a direction to which the second cylindrical portion C2 extends and in a radial direction are formed at the flange portion C7. The one or more of recesses or concave portions C8 allows the flange portion C7 to deform when the chamber member C slides within the housing A, and functions as a release passage where an air passes through a gap between the chamber member C and the housing A from the mixing portion A5.

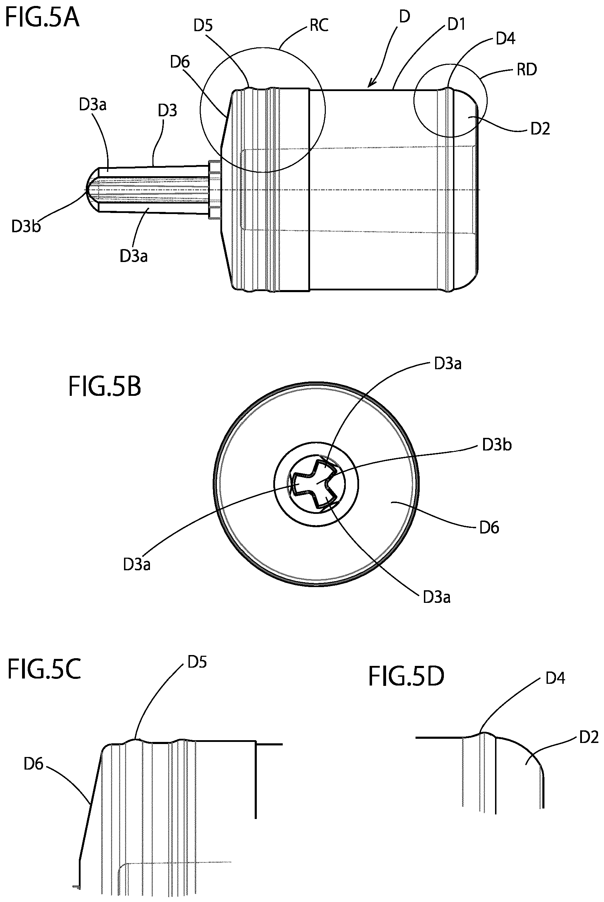

As illustrated in Fig. 1 and Figs. 5A through 5D, the piston member D includes a piston portion D1 inserted within the second cylindrical portion C2 from the third opening portion C1 of the chamber member C and sliding in the second cylindrical portion C2, an operating portion D2 provided at a rear end of the piston portion D1 and a pressing rod portion D3 provided at a front end of the piston portion D1, pushing the second closing portion C6 and opening the second discharge port C5 when the operation portion D2 is pushed toward the nozzle B, pushing the first closing portion A7 provided at the partition wall portion A3 of the housing A and opening the first discharge port A6 when the operation portion D2 is further pushed.

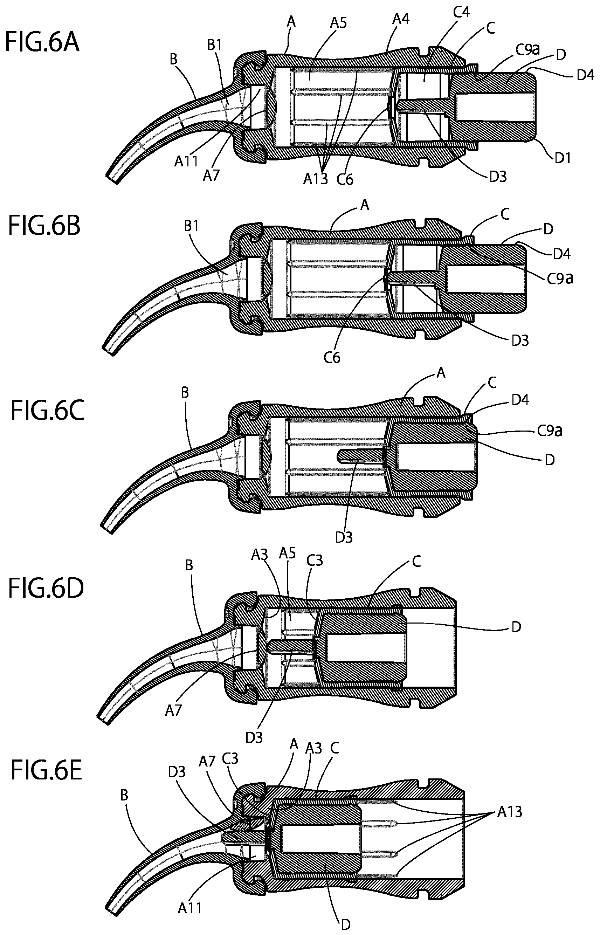

As illustrated in Fig. 5A, an annular fitting portion D4 extending along the peripheral direction toward an outer side in a radial direction is formed at an end close to the operating portion D2 of the piston portion D1 of the piston member D. The fitting portion D4 has a shape of an annular projection portion that projects radially outward and extends in the circumferential direction. In addition, as illustrated in Fig. 4A and Figs. 6A through 6D, in the chamber member C, an annular fitted portion C9 of which the annular fitting portion D4 is fitted is formed at an inner peripheral adjacent to the third opening portion C1 of the second cylindrical portion C2 of the chamber member C sliding within the first cylindrical portion A4 of the housing A in a state that the piston member D is inserted within the second cylindrical portion C2 of the chamber member C and the pressing rod portion D3 releases the second closing portion C6. The annular fitted portion C9 has a shape of an annular recess portion that opens radially inward and extends in the circumferential direction. The shapes and dimensions of the annular fitting portion D4 and the annular fitted portion C9 are determined so as not to release the engagement by increasing inner pressure of the mixing portion A5. Note that the annular fitting portion D4 may have a shape of an annular recess portion opening radially inward and extending circumferentially and the annular fitted portion C9 may have a shape of an annular projecting portion projecting radially outward and extending circumferentially.

As illustrated in Figs. 5A and 5B, the pressing rod portion D3 of the piston member D has a configuration in which three of ribs D3a extending to a longitudinal direction are arranged at circumferential intervals. In addition, tip portions of the three of ribs D3a are curved in a projection shape in the longitudinal direction so as to converge to one point. If explained as an idea, in the case that the ribs D3a are comprised from n or more (n is an integer of 2 or more) ribs spaced apart in the circumferential direction, it is preferable that the second closing portion C6 is configured by m or more (m is an integer greater than 3 and not an integer multiple of n) divided closing pieces C6a to C6d connected to liquid-tightly close the second discharge port C5. If the ribs D3a and the divided closing pieces C6a to C6d are all arranged in the same number and at equal intervals, depending on the position of the pressing rod portion D3 and the chamber member C in the rotation direction, the opening area becomes extremely narrow when the divided closing piece fits exactly between the ribs D3a even if the pressing rod portion D3 opens the second closing portion C6. If the ribs D3a and the divided blocking pieces C6a to C6d are all arranged in the same number and at equal intervals, depending on the rotational position of the pressing rod portion D3 and the chamber member C, even if the pressing rod portion D3 opens the second blocking portion C6, if the divided blocking piece fits exactly between the ribs D3a, the opening area will be extremely narrow.When the relationship between the number n of the ribs D3a and the number m of the divided closing pieces is set as mentioned above, it can be prevented the opening area from becoming extremely narrow since each of the divided closing piece C6a to C6d is are prevented from getting caught between the two ribs D3a.

Note that the each of m or more divided closing pieces C6a through C6d is respectively connected with a peripheral portion of the second discharge port C5 by a permanently connected structure portion C10 not to separate from the second discharge port C5 even if being pushed by the pressing rod portion D3, and furthermore, the m or more divided closing pieces C6a through C6d are connected to one another by a provisionally connected structure C11 separated when pressed by the pressing rod portion D3. If the configuration explained above is adopted, it can be performed that the second component is surely pushed out into the mixing portion A5 by which the second closing portion C6 is reliably opened, and the opened second closing portion C6 does not become an obstacle to the discharge of the second component.

The second component begins to enter the mixing portion A5 in a state that the second discharge port C5 is opened by which the pressing rod portion D3 pushes the second closing portion C6 by which the piston member D is pushed into the chamber member C. Furthermore, the second component is moved into the mixing portion A5 from the second component containing portion C4 in the chamber member C by which the piston member D is pushed. In the state mentioned above, the annular fitting portion D4 is fitted in the annular fitted portion C9, but if this fitting is released, the second component that has entered the mixing portion A5 will flow back into the second component containing portion C4. If the backflow is occurred, it may be a problem that poor mixing is occurred since the amount of the second component to be mixed is decreasing.

Thereafter, the dental capsule container is mounted on a vibration device, and the dental capsule container is vibrated or rotated, etc., to mix the first component and the second component in the mixing section A5. If the piston member D is further pushed in after that the mixing process has been completed, the inner pressure in the mixing portion A5 is getting increased since the piston member D and the chamber member C become together and are moved close to the nozzle B side within the mixing portion A5 while compressing the mixture in the mixing portion A5. When the piston member D and the chamber member C are further pushed in after the process mentioned above, the inner pressure in the mixing portion A5 is getting more increased until that the pressing rod portion D3 pushes the first closing portion A7 provided at the partition wall portion A3 of the housing A and opens the first discharge port A6. In the case that the inner pressure in the mixing portion A5 is increased, a force is applied to the piston portion D1 of the piston member D in a direction to push the piston member D out of the chamber member C through the second discharge port C5. If the engagement between the annular fitting portion D4 and the annular fitted portion C9 is released at the time that the force explained above is applied, the second component in the mixing portion A5 may backflow into the second component containing portion C4. When the backflow explained above is occurred, it may be a problem that the amount of a predetermined mixture cannot be ejected through the nozzle B. In addition, in the case that the second component remains in the second component containing portion C4 by the backflow of the second component, it may be a problem that the remained second component is ejected from the nozzle B in a state that the second component is separated from the mixture (not uniform) when the mixture in the mixing portion A is ejecting. However, in the present embodiment, the shapes and dimensions of the annular fitting portion D4 and the annular fitted portion C9 are determined so as not to release the fitting by increasing the inner pressure of the mixing portion A5 so that the above-mentioned problem is not occurred. According to the present embodiment, the dental capsule container that can mix the first component and the second component in the right proportions in the mixing portion can be provided even if the pressing force is not constantly applied to the piston member.

In addition, as illustrated in Figs. 5A and 5C, one or more another circular annular projection portions D5 projecting radially outward and extending in the circumferential direction are formed at the end close to the pressing rod portion D3 of the piston portion D1 of the piston member D. An annular compression area surface C12 compressing the one or more the other circular annular projections D5 is formed in a certain area beyond the circular fitted portion C9 toward the bottom wall portion C3 at the inner circumferential portion of the second cylindrical section C2 of the chamber member C. A reverse tapered annular compression release area surface C13 expanding outward in the radial direction is formed so as gradually to release compression of the one or more of the other circular annular projections D5 in another area of the inner circumferential portion from the compression area C12 continuously toward the bottom wall C3. A reverse tapered shape is not formed in an inner circumferential area C14 close to the bottom wall portion C3 of the chamber member C continued to the compression release area surface C13. Note that the inner circumferential area C14, of course, may be formed in a reverse tapered shape similar to the compression release area surface C13.

Furthermore, a contact surface C15 contacting an inner surface of the housing A is formed at an outer portion close to the bottom wall C3 of the chamber member C. Thereby, an effect that prevents the piston member D from moving backward due to increasing of the inner pressure when the piston member D is pushed in by which the reverse tapered shape is formed on the compression release area surface C13. In addition, it is possible to suppress a decrease in the sliding property between the contact surface C15 and the inner surface of the housing A since the deformation of the contact surface C15 of the chamber member C (deformation in which the outer diameter of the contact surface C15 increases) is suppressed by which the reverse tapered shape is formed on the annular compression area surface C13 if the circular projection portion D5 comes into the inner circumferential area C14.

In addition, as illustrated in Fig. 1, Fig. 3A and Figs. 6A through 6E, the release passages A13 are formed at equal intervals in the circumferential direction on the inner periphery of the housing A to allow air to escape between the chamber member C and the first closing portion A7 when the first closing portion A7 is pushed and tilted by the pressing rod portion D3 of the piston member D. The one or more release passages A13 formed in the present embodiment perform that the cross-sectional shape thereof is the arc shape illustrated in Fig. 3B. In addition, as illustrated in Figs 6A through 6E, the one or more release passages perform that the air remaining in the mixing portion A5 is released to the third opening portion C1 side of the chamber member C in a state that the piston portion D1 contacts with the bottom wall portion C3 of the housing A by which the second closing portion C6 of the chamber member C is pushed open by the pressing rod portion D3 from when both the chamber member C and the piston member D together started moving toward the partition wall portion A3 of the housing A until the time when immediately before the bottom wall portion C3 of the chamber member C contacts with the partition wall portion A3. Note that the term of "the time when immediately before" means until the contact surface C1 no longer faces one or more release passages A13.

Note that the release passage A13 may be one or more and can be configured by the long and thin groove or the long and thin projection as illustrated in Figs. 3E and 3F. In the case that the release passage A13 is formed by a projecting portion, air escapes through gaps formed around the projecting portion. In the case that the release passage A13 is configured by the long and thin groove or the long and thin projection, the radial dimension of the long and thin groove or the long and thin projection (a depth dimension or an outward projecting dimension) may be the dimension range of 0.05-0.25mm. In practical, the dimension range may be within 0.08-0.18mm. When being within the above-mentioned dimension range, the state that the mixture in the mixing portion does not easily pass through the release passage A13 can be kept and air release can be also achieved.

### [EXPLANATION OF OPERATION]

Hereinafter, the operation for the dental capsule container of the present embodiment based on Fig. 6 will be explained. Firstly, the mixing portion A5 of the housing A is filled with the first component, the second component containing portion C4 of the chamber member C is filled with the second component. Then, the piston portion D1 of the piston member D inserted in the second component containing portion C4 of the chamber member C is inserted in the first cylindrical portion A4 of the housing A [Fig 6A]. The piston member D is further pushed in the first cylindrical portion A4 from the state mentioned above [Fig. 6B], the second component starts to come in the mixing portion A5 when the pressing rod portion D3 opens the second closing portion C6. When the piston member D is pushed all the way in [Fig. 6C], the second component moves from the second component containing portion C4 of the chamber member C into the mixing portion A5. The annular fitting portion D4 is fitted in the annular fitted portion C9 in the state mentioned above. As already mentioned, in the present embodiment, the problem that the second component flows back is not caused since the shape and dimensions of the annular fitting portion D4 and the annular fitted portion C9 are determined so as the fitting between the annular fitting portion D4 and the annular fitted portion C9 is not released due to increasing of the inner pressure of the mixing portion A5.

With this fitted state formed, the dental capsule container is mounted on a vibration device and the dental capsule container is vibrated or rotated, etc., to mix the first component and the second component in the mixing section A5. When the piston member D and the chamber member C are further pushed in after that the mixing process has been completed, the piston member D and the chamber member C become together and are moved toward the nozzle B within the mixing portion A5 while compressing the mixture in the mixing portion A5. After that the pressing rod portion D3 contacts with the first closing portion A7 [Fig. 6D], when the chamber member C and the piston member D come together and further pushed in toward the nozzle B, the chamber member C and the piston member D come together and are moved toward the partition wall portion A3 of the housing A. One or more of release passages A13 release air remained in the mixing portion A5 to the third opening portion C1 side of the chamber member C from when both the chamber member C and the piston member D started moving toward the partition wall portion A3 of the housing A until the time when immediately before the bottom wall portion C3 of the chamber member C comes into contact with the partition wall portion A3.

In the process of transitioning from Fig. 6C to Fig. 6E, the inner pressure in the mixing portion A5 is getting gradually increased. In the process explained above, in the present embodiment, it is suppressed that the second component in the mixture in the mixing portion A5 flows back from the mixing portion A5 to the second component containing portion C4 since the fitting between the annular fitting portion D4 of the piston member D and the annular fitted portion C9 is not released. Therefore, the refluxed second component is not remained in the second component containing portion C4 even if the backflow is caused, the possibility that the second component will be ejected from the nozzle B in a state that the second component is separated from the mixture is reduced.

### [Second aspect]

Then, an embodiment of a dental capsule container according to the second aspect of the present invention will be explained. The dental capsule container of the embodiment including a nozzle in which the tip of the nozzle can be inserted in the cavity at an ideal angle with the reduced physical burden on the patient and allowing the dentist to see the tip of the nozzle is provided.

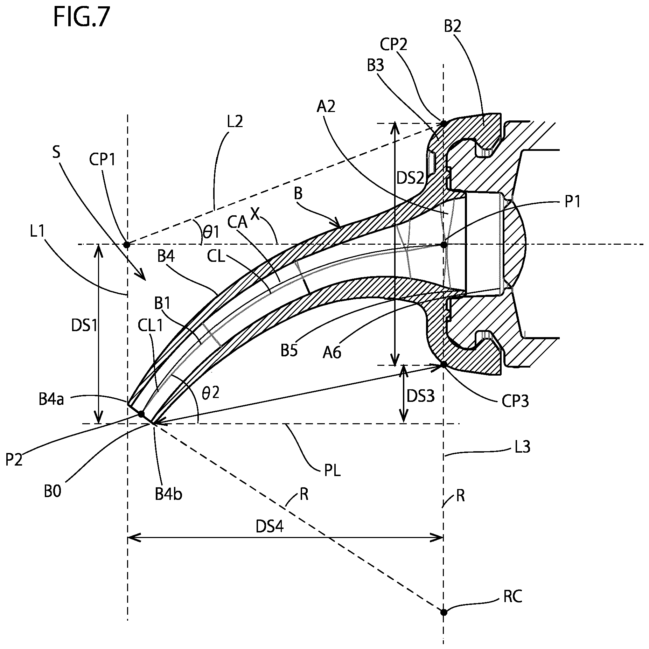

The embodiment of the dental capsule container according to the second aspect of the present invention has the same basic structure as the embodiment of the dental capsule container according to the first aspect of the present invention illustrated in Fig. 1 through Fig. 6. With respect to the embodiment of the dental capsule container according to the second aspect of the present invention, an enlarged cross-section view of the nozzle B is illustrated in Fig. 7, in particular, since the structure of the nozzle B is restricted. As illustrated in Fig. 7, a nozzle body B4 has a curved shape that gradually curves in a direction away from the axis line X and that extends in the longitudinal direction through the center of the first cylindrical portion A4 from the discharge port A6 toward the discharge port B0 and a shape that a cross-sectional area of the discharge passage B1 gradually decreases from the discharge port A6 toward the discharge port B0. Note that, the details of the curved shape will be explained later.

In the dental capsule container of the present embodiment, the tip portion of the nozzle body B4 located at the farthest position from the cylindrical portion A4 is defined as an outermost edge B4a and the tip portion of the nozzle body B4 facing the outermost edge portion B4a of the nozzle body is defined as an opposite tip portion B4b in order to define the shape of the nozzle B. Then, a intersecting point of a first virtual line L1 that extends to a direction passing through the outermost edge portion B4a and perpendicular to the axis line X and the axis line X is determined as a first intersecting point CP1 and the distance between the axis line X and an virtual parallel line PL that passes through the opposite tip portion B4b and extends parallel to the axis line X is determined as a first distance DS1. Furthermore, an area including the first intersecting point CP1, the outermost edge portion B4a and the opposite tip portion B4b and further the axis line X are determined as a virtual plane and an angle between a second virtual line L2 that is located within the virtual plane S, passes through the first intersecting point CP1, and is a tangent line to the outer surface of a base portion B3 and the axis line X is determined as θ1. Then, a intersecting point of the second virtual line L2 and the outer surface of the base portion B3 is determined as a second intersecting point CP2, a intersecting point of a third virtual line L3 passing through the second intersecting point CP2 and perpendicular to the axis line X that extends beyond the axis line X and the outer surface of the base portion B3 is determined as a third intersecting point CP3, a distance between the second intersecting point CP2 and the third intersecting point CP3 is determined as a second distance DS2, a shortest distance between the third intersecting point CP3 and the virtual parallel line PL is determined as a third distance DS3, and a shortest distance between the outermost edge portion B4a and the third virtual line L3 is determined as a fourth distance DS4. In addition, in the present embodiment, the definitions are set as determined above and the angles and lengths are limited as follows.

In this embodiment, the angle θ1 is set by 21.1°. Note that a preferrable angle range of the angle θ1 is an angle range within 18.0°-23.0°.

The first distance DS1 is set by 9.3mm, a preferrable length range of the first distance DS1 is a length range within 7.8mm-10.8mm.

The second distance DS2 is set by 12.9mm, a preferrable length range of the second distance DS2 is a length range within 10.0mm-14.0mm.

The third distance DS3 is set by 4.1mm, a preferrable length range of the third distance DS3 is a length range within 1.5mm-4.7mm.

The fourth distance DS4 is set by 16.8mm, a preferrable length range of the fourth distance DS4 is a length range within 14.8mm-16.8mm.

Then, the curved shape of the nozzle body B4 is a shape that a center line CL extending to the direction to which the nozzle body B4 extends through the center of the discharge passage B1 has the radius center on the third virtual line L3 and that the radius of curvature R passing through a cross point P1 of the axial line X and the third virtual line L3 and a center point P2 of the ejection port B0 is along a virtual circular arc CA having the length range of 18.0mm-21.5mm. In this specification, the term "the center line CL extends along the virtual circular arc CA" naturally includes not only the state in which the center line CL extends in a state in which it completely coincides with the virtual circular arc CA, but also the case in which the center line CL extends in a state in which it is spaced apart from the virtual circular arc CA in the radial direction.

If the shape of a nozzle of a dental capsule container is defined as well as the present embodiment, when the nozzle and container body are inserted into the patient's mouth, the dentist can easily visually confirm that the tip of the nozzle is entering the opening of the cavity of the patient's molar tooth. Therefore, the present embodiment can provide a dental capsule container including a nozzle in which the tip of the nozzle can be inserted in the cavity at an ideal angle with the reduced physical burden on the patient and allowing the dentist to see the tip of the nozzle without varying the shape of the nozzle. The above-mentioned dimensions and angles of each part are the ranges of a maximum value and a minimum value that have been found through many experiments, the effect of the invention does not arise from the individual dimension or angle of each part alone. In addition, the meaning that the dimension and angle of each part are the maximum value and minimum value is that the above-mentioned dimension and angle show the allowable range in the case that a high-skilled dentist uses the dental capsule container of the present invention so that the allowable ranges of the above-mentioned dimension and angle are varied relative to the experience level of a dentist.

The dimensions and angles of each part of a dental capsule container suitable for use by a mid-level dentist who has better skills than a new dentist but less skill than an experienced dentist are preferably as follows:
The angle θ1 is set in an angle range within 19.5°-22.5°.

The first distance DS1 is set in a length range within 8.3mm-10.3mm.

The second distance DS2 is set in a length range within 11.0mm-13.5mm.

The third distance DS3 is set in a length range within 2.5mm-4.5 mm.

The fourth distance DS4 is set in a length range within 15.8mm-17.8mm.

The radius of curvature R is set in a length range within 18.5mm-21.3mm.

The dimensions and angles of each part for the dental capsule container, suitable for use by many dentists from a novice dentist to an experienced dentist, are preferably as follows.

The angle θ1 is set in an angle within 20.5°-21.5°.

The first distance DS1 is set in a length within 9.0mm-9.8mm.

The second distance DS2 is set in a length within 12.2mm-13.2mm.

The third distance DS3 is set in a length within 3.5mm-4.3mm.

The fourth distance DS4 is set in a length within 16.4mm-17.4mm.

The radius of curvature R is set in a length range within 18.8mm-19.5mm.

In the present embodiment, an angle θ2 between a portion CL1 of the center line CL located within 3mm from the discharge port B0 of the discharge passage B1 and the virtual parallel line PL is 53.9°. It is preferrable for the angle θ2 to set as an angle within 52°-70°. It is more preferrable for the angle θ2 to set as an angle range within 52°-58°.

The dimensions and angles of each part defined in the present invention have been found through many experiments. Note that each range of the above-mentioned numbers was determined taking into account the differences in the dentists' skill levels. That is, if the shape of the nozzle B of the dental capsule container is defined by the shape mentioned above, when the nozzle B and the nozzle body B4 are inserted into the patient's mouth without straining, the tip of the nozzle can be entered the opening of the cavity of the patient's molar tooth with a preferrable angle, and the dentist is clearly sure to easily visually confirm the position of the tip of the nozzle if dentists with different levels of expertise use dental capsule containers with appropriate numerical ranges according to their level of expertise. Therefore, according to the present embodiment, it is also possible to fill the cavity with the dental fluid by setting the tip of the nozzle at an angle close to 90° or 90 degrees to the bottom of the cavity.

The thickness of the wall portion surrounding the discharge passage B1 of the nozzle body B4 is that the thickness dimension of the base portion B3 side is thicker than the thickness dimension of the discharge port side. In the case explained above, the required strength of the nozzle B can be ensured even if the length of the nozzle B is increased.

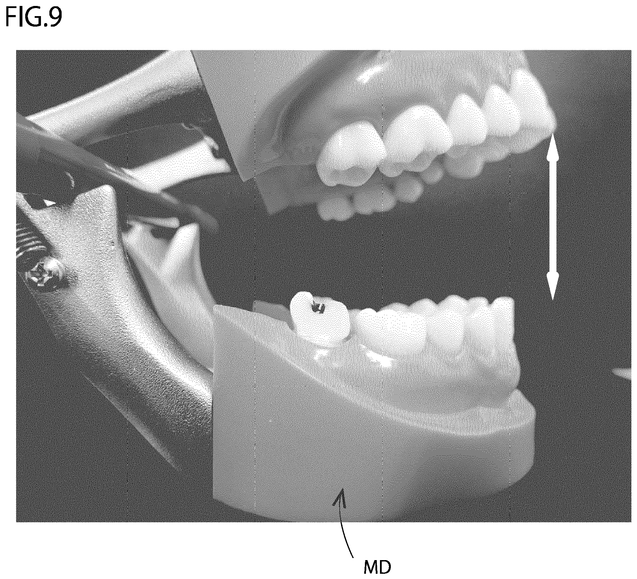

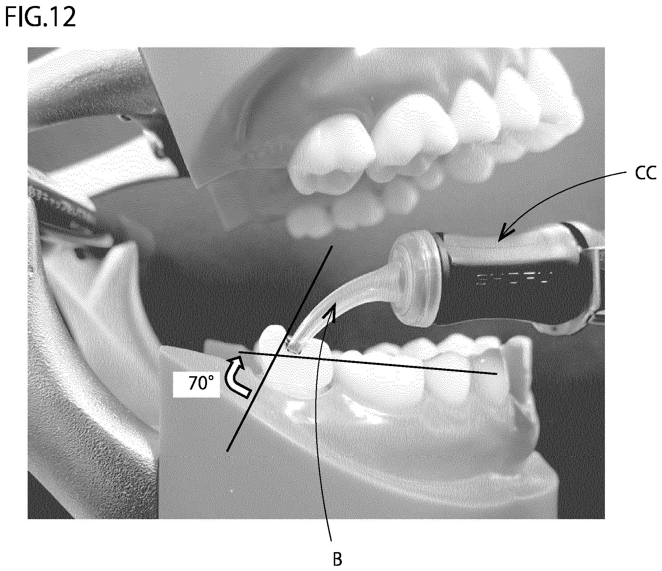

Fig. 8 is a photograph instead of a drawing used for explaining a method for confirming the feature of the dental capsule container of the present embodiment. As illustrated in Fig.8, the confirmation of the effectiveness was determined by judging whether it was easy for an operator to visually confirm that the tip of the nozzle B of the dental capsule container CC was inserted at a predetermined angle close to 90° relative to the bottom surface of the cavity after a practical attachment of the dental capsule CC to a dedicated adapter AP. The state in which the nozzle B and the nozzle body B4 were inserted into the oral cavity was reproduced by using an artificial teeth model MD for teaching materials since it is difficult to practically take a picture of the nozzle B and the nozzle body B4 inserted in the patient's mouth. Fig.9 is a photograph instead of a drawing showing a state that opposing teeth of the patient have an average opening amount of 40mm. Fig. 10 is a photograph instead of a drawing showing cavity PC formed in molar tooth MT of artificial tooth. Fig. 11 is a photograph instead of a drawing showing a state that the nozzle B of the dental capsule container CC of the present embodiment is perpendicular to the bottom surface of the cavity PC formed in the molar tooth MT. In the state mentioned above, the housing A of the dental capsule container CC does not contact with the opposing teeth. Fig. 12 is a photograph instead of a drawing showing a state that the dental capsule container CC of the present embodiment is placed almost horizontally with respect to the dentition. The tip of the nozzle B in the state mentioned above is at an angle being equal or more 70° relative to the bottom surface of the cavity PC, however, it is possible to fill the fluid from the nozzle B into the bottom surface of the cavity PC without which the housing A of the dental capsule container CC comes to contact with the opposing teeth even in the state mentioned above.

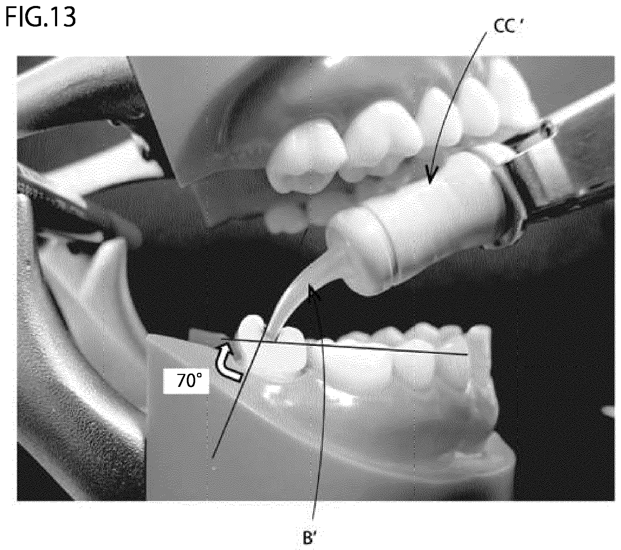

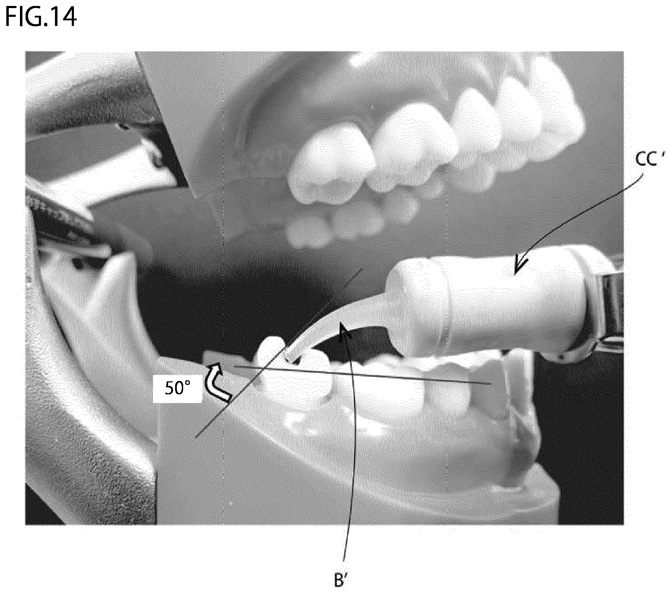

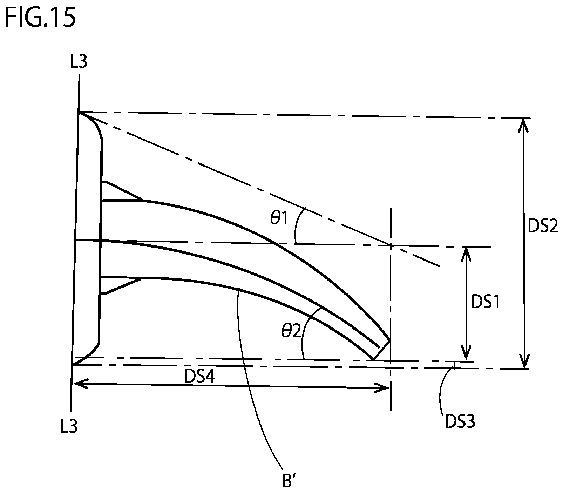

Fig. 13 and Fig. 14 are photographs instead of drawings showing a state in case of using a comparative dental capsule container CC' having a nozzle that does not meet the limited range of the nozzle used in the present invention. In the comparative dental capsule container CC', the angle θ1 of the nozzle B' as illustrated in Fig. 15 was 21.2°, the angle θ2 was 41.2°, the first distance DS1 was 6.2mm, the second distance DS2 was 13.4mm, the third distance DS3 was -0.4mm and the fourth distance DS4 was 17mm. In the comparative dental capsule container CC', the angle θ2 was small at 41.2°, the third distance DS3 is located at minus side at -0.4mm and the tip of the nozzle is positioned closer to the axis line X than in the present embodiment. In addition, the radius of curvature R indicating the degree of curvature of the nozzle was 20.2mm. Relatively speaking, the comparative dental capsule container CC' has a gentler degree of curvature (R) of the entire nozzle and a smaller amount of extension (the third distance DS3 is less than zero), and the bending angle θ2 of the tip of the nozzle has a smaller amount compared to the nozzle B of the present embodiment. From the difference mentioned above, as the example illustrated in Fig. 12, when the tip of the nozzle is at an angle of 70° or more relative to the bottom surface of the cavity PC, the angle would be a burden on the patient since the housing comes to contact with the opposing teeth. Furthermore, as illustrated in Fig. 14, as the example illustrated in Fig. 11, when the container body is placed horizontally against the dentition, it was not enough to fill the fluid into the cavity since the tip of the nozzle had an angle of 50° or less relative to the bottom surface of the cavity. If the comparative dental capsule container CC' can be operated with appropriate manipulation by a skilled person, a required filling operation would be performed, but the subject matter that the operation is difficult for a non-skilled person will be remained.

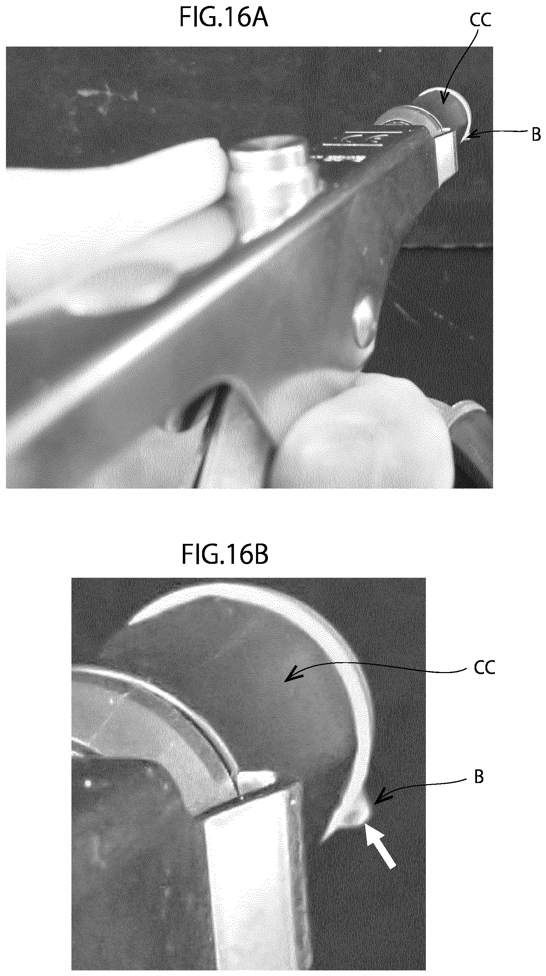

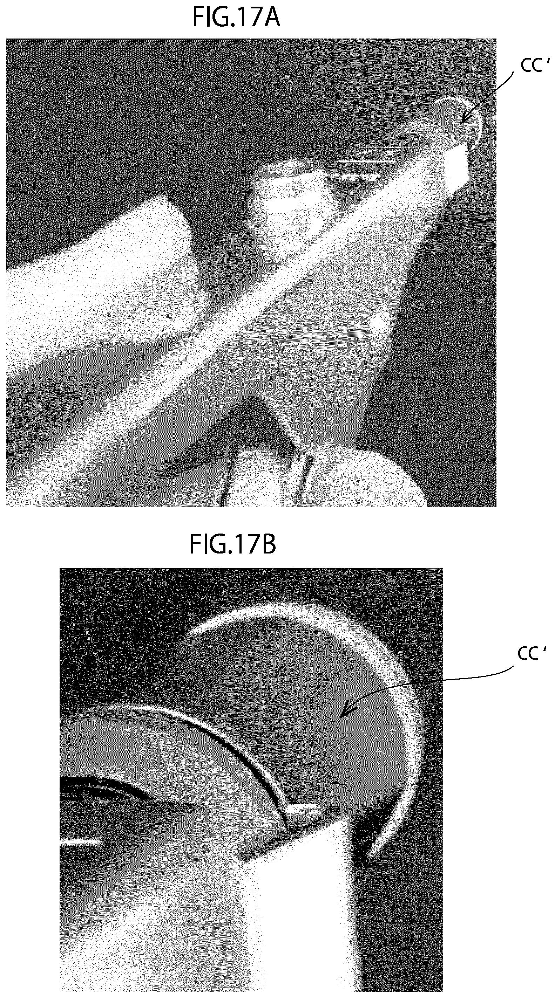

Then, the results of the experiments of the effect of the length dimension of the nozzle B (distance DS3 and distance DS4) on visual confirmation of the position of the nozzle relative to the cavity will be explained. Fig. 16A is a photograph instead of a drawing simulating a state that a dentist sees when the dental capsule container of the present embodiment is inserted in the mouth of a patient with the same condition set as Fig. 11. Fig 16B is a photograph instead of a partially enlarged drawing shown in Fig. 16A. According to Fig. 16B, in the present embodiment, it is clear to confirm the tip of the nozzle since the third distance DS3 is 4.1mm and the fourth distance DS4 is 16.8mm. Fig. 17A is a photograph instead of a drawing simulating a state that a dentist sees when a comparative dental capsule container CC' using the nozzle with which the third distance DS3 is 1mm and the fourth distance DS4 is 14mm is inserted in the mouth of a patient with the same condition set as Fig. 11. Fig. 17B is a photograph instead of a partially enlarged drawing shown in Fig. 17A. According to Fig. 17B, it is clear not to confirm the tip of the nozzle when the third distance DS3 is 1mm and the fourth distance DS4 is 14mm. According to the example of the experiments, it is found that the third distance DS3 and the fourth distance DS4 play an important role in order to visually confirm the tip of the nozzle.

### (OTHERS)

The above-mentioned description of the embodiments is for the purpose of understanding the present invention, and the present invention is not limited to the above-mentioned embodiments.

### INDUSTRIAL APPLICATION

According to the invention of the first embodiment, the problem that the second component flows back into the mixing portion A5 is not caused since shape and dimensions of the annular fitting portion D4 and the fitted portion C9 are determined so as not to release the engagement of the annular fitting portion D4 and the fitted portion C9 due to increasing the inner pressure of the mixing portion A5. Therefore, according to the present invention, a dental capsule container that the first and second components can be mixed in the mixing portion at an appropriate ratio can be provided even if the pressing force is not constantly added to the piston member.

In addition, as the invention of the second embodiment, the present invention can provide a dental capsule container including a nozzle in which the tip of the nozzle can be inserted in the cavity at an ideal angle with the reduced physical burden on the patient and allowing the dentist to see the tip of the nozzle if the shape of the nozzle of the dental capsule container is defined.

### [OTHER INVENTIONS]

This specification discloses the following inventions which are different from the present inventions.
(A) A dental capsule container comprising:
   a housing A including a cylindrical portion having a first opening portion A1 provided at one end of the cylindrical portion, a second opening portion A2 provided at the other end of the cylindrical portion, and a partition wall portion A3 adjacent to the second opening portion A2, and further being filled by a fluid object used in dental treatment in a region extending from the partition wall portion A3 toward the first opening portion A1 side, and a discharge port provided at the partition wall portion A3 and discharging the flowable dental fluid object,
   a nozzle B provided at the cylindrical portion of the housing A and discharging the flowable dental fluid discharged from the discharge port, and
   sliding members (C, D) sliding within the cylindrical portion of the housing A,
   wherein the a nozzle B includes a nozzle body B4 having a discharge passage B1 therein which guides the fluid object discharged from the discharge port A6 to an ejection port B0 and a base portion B3 that fixes the nozzle body B4, the nozzle body B4 has a curved shape that gradually curves from the discharge port A6 toward the discharge port B0 in a direction away from the axis line X that extends in the longitudinal direction through a center of the cylindrical portion and the discharge passage B1 has a shape that a cross-sectional area of the ejection passage B1 gradually decreases from the discharge port A6 toward the discharge port B0,
   wherein;
   a tip portion of the nozzle body B4 located at a farthest position from the cylindrical portion is defined as an outermost edge portion B4a,
   a tip portion of the nozzle body B4 opposed to the outermost edge portion B4a of the nozzle body B4 is defined as an opposite edge portion B4b,
   an intersecting point between a first virtual line L1 passing through the outermost edge portion B4a and extending in a direction perpendicular to the axis line X and the axis line X is defined as a first intersecting point CP1,
   a distance between the axis line X and a virtual parallel line PL that passes through the opposite edge portion B4b and extends parallel to the axis line X is defined as a first distance DS1,
   an angle between the axis line X and a second virtual line L2 that is located within a virtual plane S, passes through the first intersection point CP1, and is a tangent line to an outer surface of the base portion B3 is defined as θ1, the virtual plane S including the first intersection point CP1, the outermost edge portion B4a, the tip opposing portion B4b, and the axis line X,
   an intersecting point between the second virtual line L2 and the outer surface of the base portion B3 is defined as a second intersecting point CP2,
   an intersecting point between a third virtual line L3 passing through the second intersecting point CP2 and perpendicular to the axis line X and extending beyond the axis line X and an outer surface of the base portion B3 is defined as a third intersecting point CP3,
   a distance between the second intersecting point CP2 and the third intersecting point CP3 is defined as a second distance DS2,
   a shortest distance between the third intersecting point CP3 and the virtual parallel line PL is defined as a third distance DS3, and
   a shortest distance between the outermost edge portion B4a and the third virtual line L3 is defined as a fourth distance DS4,
   the angle θ1 is set to an angle within 18.8 °-23.0°,
   the first distance DS1 is set to a length within 7.8mm-10.8mm,
   the second distance DS2 is set to a length within 10.0mm-14.0mm,
   the third distance DS3 is set to a length within 1.5mm-4.7mm,
   the fourth distance DS4 is set to a length within 14.8mm-18.8mm, and
   the curved shape of the nozzle body B4 is a shape in which a center line CL extending through a center of the discharge passage B1 in the direction in which the nozzle body B4 extends, extends along a virtual circular arc CA having a radius of curvature R within 18.0mm-21.5mm and having a radius center on the third virtual line L3, the virtual circular arc CA passing through a intersecting point P1 between the axis line X and the third virtual line L3 and a center point P2 of the discharge port B0.
(B) The dental capsule container according to the above (A), wherein:
   an angle θ2 between a center line portion CL1 in the center line CL located within 3mm from the discharge port B0 of the discharge passage B1 and the virtual parallel line PL is set to an angle within 52° to 70°.
(C) The dental capsule container according to the above (A) or (B), wherein:
   the angle θ1 is set by an angle within 19.5 °-22.5°,
   the first distance DS1 is set by a length within 8.3mm-10.3mm,
   the second distance DS2 is set by a length within 11.0mm-13.5mm,
   the third distance DS3 is set by a length within 2.5mm-4.5mm,
   the fourth distance DS4 is set by a length within 15.8mm-17.8mm, and
   the radius of curvature R is set by a length within 18.5mm-21.3mm.
(D) The dental capsule container according to the above (A) or (B), wherein:
   the angle θ1 is set to an angle within 20.5 °-21.5°,
   the first distance DS1 is set by a length within 9.0mm-9. 8mm,
   the second distance DS2 is set by a length within 12.2mm-13.2mm,
   the third distance DS3 is set by a length within 3.5mm-4.3mm,
   the fourth distance DS4 is set by a length within 16.4mm-17.4mm, and
   the radius of curvature R is set by a length within 18.8mm-19.5mm.
(E) The dental capsule container according to the above (A) or (B), wherein:
   the thickness of the wall portion surrounding the discharge passage B1 of the nozzle body B4 is that the thickness dimension of the base portion B3 side is thicker than the thickness dimension of the discharge port B1 side.

## Claims

1. A dental capsule container comprising:
a housing A including:
a first cylindrical portion A4 having a first opening portion A1 provided at one end of the first cylindrical portion A4, a second opening portion A2 provided at the other end of the first cylindrical portion A4, a partition wall portion A3 adjacent to the second opening portion A2, and a mixing portion A5 in which a first component is contained within a region extending from the partition wall portion A3 toward the first opening portion A1 side and into which the second component is injected from the first opening portion A1 side to mix the first component and the second component,
a first discharge port A6 provided at the partition wall portion A3 and discharging a mixture from the mixing portion A5 and
a first closing portion A7 releasably closing the first discharge port A6;
a nozzle B provided at the first cylindrical portion A4 of the housing A and discharging the mixture discharged from the first discharge port A6;
a chamber member C sliding within the first cylindrical portion A1 of the housing A and including:
a second cylindrical portion C2 having a third opening portion C1 at one end of the second cylindrical portion C2,
a bottom wall portion C3 closing the other end of the second cylindrical portion C2,
a second component containing portion C4 containing the second component,
a second discharge port C5 provided at the bottom wall portion C3 and discharging the second component from the second component containing portion C4 into the mixing portion A5, and
a second closing portion C6 releasably closing the second discharge port C5, and
a piston member D including:
a piston portion D1 inserted from the third opening portion C1 into the second cylindrical portion C2 and sliding within the second cylindrical portion C2,
an operating portion D2 provided at a rear end of the piston portion D1, and
a pressing rod portion D3 provided at a front end of the piston portion D1 and opening the second discharge port C5 in an opening state for the second discharge port C5 by pushing the second closing portion C6 when the operating portion D2 is pushed toward the nozzle B, and opening the first discharge port A6 by pushing the first closing portion A7 provided at the partition wall portion A3 of the housing A when the operating portion D2 is further pushed,
wherein an annular fitting portion D4 extending in a radial direction and a circumferential direction is formed at an end close to the operating portion D2 of the piston portion D1 of the piston member D,
wherein an annular fitted portion C9 is formed on an inner circumferential portion of the second cylindrical portion C2 adjacent to the third opening portion C1 of the second cylindrical portion C2 of the chamber member C, into which the annular fitting portion D4 is fitted when the piston member D is inserted into the second cylindrical portion C2 of the chamber member C so that the pressing rod portion D3 opens the second closing portion C6, and
wherein the shapes and dimensions of the annular fitting portion D4 and the annular fitted portion C9 are determined so that the fitting between the annular fitting portion D4 and the annular fitted portion C9 is not released due to an increase in inner pressure of the mixing portion A5.

2. The dental capsule container according to claim 1, wherein:
the annular fitting portion D4 is a circular annular projection projecting radially outward and extending circumferentially, and
the annular fitted portion C9 is a circular annular recess opening radially inward and extending circumferentially.

3. The dental capsule container according to claim 1, wherein:
the annular fitting portion D4 is a circular annular recess extending inward in the radial direction and extending in the circumferential direction, and
the annular fitted portion C9 is a circular annular projection extending outward in the radial direction and extending in the circumferential direction.

4. The dental capsule container according to claim 2, wherein:
one or more other circular annular projections D5 projecting radially outward and extending in the circumferential direction are formed at an end close to the pressing rod portion D3 of the piston portion D1 of the piston member D,
an annular compression area surface C12 compressing the one or more other circular annular projections D5 is formed in a certain area from a position beyond the annular fitted portion C9 toward the bottom wall portion C3 at the inner circumferential portion of the second cylindrical portion C2 of the chamber member C,
a reverse tapered annular compression release area surface C13 expanding outward in the radial direction is formed so as to gradually release compression of the one or more other circular annular projections D5 in another area of the inner circumferential portion from the compression area surface C12 toward the bottom wall portion C3,
the compression release area surface C13 is formed as including a central portion in an area of the inner circumferential portion between the third opening portion C1 and the bottom wall portion C3, and
a contact surface contacting an inner circumferential surface of the housing A is formed in an outer circumferential portion close to the bottom wall portion C3 of the chamber member C.

5. The dental capsule container according to claim 1, wherein:
one or more air release passages A13 that release air remained in the mixing portion A5 through the first opening portion A1 of the housing A are formed in an inner circumferential portion of the first cylindrical portion A4 of the housing A, from the time when both the chamber member C and the piston member D started moving toward the partition wall portion A3 of the housing A in a state in which the second closing portion C6 of the chamber member C is pushed open by the pressing rod portion D3 and the piston portion D1 contacts with the bottom wall portion C3 of the chamber member C, until the time when immediately before the bottom wall portion C3 of the chamber member C comes into contact with the partition wall portion A3.

6. The dental capsule container according to claim 5, wherein:
the time when immediately before means the time when the contact surface C15 no longer faces the one or more air release passages A13, and
the air release passage A13 is constituted by a long and thin groove or a passage formed between two long and thin projections.

7. The dental capsule container according to claim 6, wherein:
The radial dimension of the long and thin groove is 0.05-0.25mm or the radial dimension of the long and thin projection is 0.08-0.18mm.

8. The dental capsule container according to claim 1, wherein:
a flange portion C7 projecting outside the radial dimension of the second cylindrical portion C2 is provided at an end close to the third opening portion C1 of the second cylindrical portion C2 of the chamber member C, and
one or more recesses C8 opening toward the direction to which the second cylindrical portion C2 extends and outside the radial dimension are formed at the flange portion C7.

9. The dental capsule container according to claim 1, wherein:
the pressing rod portion D3 of the piston member D has a configuration that a plurality of ribs D3a extending in a longitudinal direction are circumferentially arranged spaced apart.

10. The dental capsule container according to claim 9, wherein:
the plurality of ribs D3a are n or more (n is an integer of 2 or more) ribs arranged at a predetermined interval in a circumferential direction, and
the second closing portion C6 is configured by m or more (m is an integer greater than 3 and not an integer multiple of n) divided closing pieces C6a-C6d to be connected so as to close the second discharge port C5 liquid-tightly.

11. The dental capsule container according to claim 10, wherein:
the m divided closing pieces C6a-C6d are respectively connected with the periphery of the second discharge port C5 by a permanently connected structure portion C10 not separated from the second discharge port C5 even when being pushed by the pressing rod portion D3, and
each of the m divided closing pieces C6a-C6d is interconnected by a provisionally connected structure portion C11 being separated when being pushed by the pressing rod portion D3.

12. The dental capsule container according to claim 9, wherein:
the second cylindrical portion C2, the bottom wall portion C3 and the second closing portion C6 of the chamber member C are formed by integral molding, and
the thickness dimensions of the permanently connected structure portion C10 connecting the m divided closing pieces C6a-C6d with the second discharge port C5 are thicker than thickness dimensions of the provisionally connected structure portion C11 interconnecting to the m divided closing pieces C6a-C6d.

13. The dental capsule container according to claim 1, wherein:
the first closing portion A7 is configured by one closing piece A71 closing the first discharge port A6,
one part of the outer circumferential portion of the one closing piece A71 is connected to the periphery of the first discharge port A6 by a permanently connected structure C10 not separated from the periphery of the first discharge port A6 even when being pushed by the pressing rod portion D3 and remaining part of the outer circumferential portion of the one closing piece A71 is connected to the periphery of the first discharge port A6 by a provisionally connected structure C11 being separated when being pushed by the pressing rod portion D3,
a connection portion A10 to which the nozzle B is connected is integrally formed at the housing A,
a communication passage A11 communicating the first discharge port A6 with a discharge passage B1 of the nozzle B is formed at the connection portion A10,
one surface positioned at the mixing portion A5 side of the one closing piece A71 is configured by a curved surface A7a that is curved so as to project toward the first opening portion A1, and
the shape of other surface positioned at the opposite side to the curved surface A7a of the one closing piece A71 and the shape of the communication passage A11 formed at the connection portion A10 are defined so as not to block the movement of the pressing rod portion D3 which comes into the communication passage A11 while pushing the one closing piece A71.

14. The dental capsule container according to claim 13, wherein:
the other surface of the one closing piece A71 is a flat surface.

15. The dental capsule container according to claim 2, wherein:
the contour shape of the one closing piece A71 is circular, the shape of the communication passage A11 is cylindrical and the diameter size of the communication passage A11 is 1.05 times or more larger than the diameter size of the contour of the one closing piece A71.
